# EUROPÄISCHE PATENTSCHRIFT

(11) **EP 2 569 853 B1**
(45) Veröffentlichungstag und Bekanntmachung des Hinweises auf die Patenterteilung: **30.10.2019**
(21) Anmeldenummer: 11717950.7
(22) Anmeldetag: 27.04.2011
(51) Int. Cl.: H02K 3/51

(54) **ROTOR FÜR EINE DYNAMOELEKTRISCHE MASCHINE**
ROTOR FOR A DYNAMOELECTRIC MACHINE
ROTOR POUR UNE MACHINE DYNAMOÉLECTRIQUE

(30) Priorität: 12.05.2010 DE 102010020415
(43) Veröffentlichungstag der Anmeldung: 20.03.2013
(73) Patentinhaber: Voith Patent GmbH, 89522 Heidenheim (DE)
(72) Erfinder: HENNING, Holger, 89537 Giengen (DE); EILEBRECHT, Philipp, 89522 Heidenheim (DE); VESER, Stefan, 89558 Treffelhausen (DE); HILDINGER, Thomas, 89522 Heidenheim (DE)
(74) Vertreter: Dr. Weitzel & Partner
(86) Internationale Anmeldenummer: PCT/EP2011/002111
(87) Internationale Veröffentlichungsnummer: WO 2011/141128

(56) Entgegenhaltungen:
- EP-A2- 0 736 953
- CH-A5- 592 380
- DE-A1- 19 535 700
- DE-A1- 19 635 295
- DE-C- 701 612
- DE-C1- 19 519 127

## Beschreibung

Die Erfindung betrifft einen Rotor für eine dynamoelektrische Maschine, beispielsweise einen elektrischen Generator, nach der im Oberbegriff von Anspruch 1 näher definierten Art.

Zur Befestigung der Wickelköpfe von Rotorwicklungen ist es unter anderem üblich, die Wickelköpfe innen durch einen ringartigen Wickelkopfträger abzustützen und die Wickelköpfe auf diesem Wicklungsträger mit Hilfe von Bandagen zu fixieren. Insbesondere bei größeren Maschinen kann anstelle einer Bandage auch ein mehrfach geteilter Ring verwendet werden, der mit Isolierzwischenlagen an den Wickelköpfen anliegt und mit Hilfe von Schrauben am Wicklungsträger fixiert wird. Bei besonders großen Fliehkräften können auch Kappen über die Wickelköpfe geschoben werden. Derartige Kappen sind insbesondere zur Fixierung der Wickelköpfe des Rotors von Turbogeneratoren üblich (Buch "Leitfaden der Elektrotechnik" - Band 3 - "Konstruktions- und Festigkeitsberechnungen elektrischer Maschinen" Verfasser: Dr. C. von Dobbeler, 1962, B.G. Teubner Verlagsgesellschaft Stuttgart, Seiten 25 bis 29 und 58 bis 62; DE 26 29 574 B2; DE-PS 7 01 612). Es ist weiterhin bekannt, die von der umlaufenden Erregerspule einer Synchronmaschine ausgehenden Fliehkräfte mit Hilfe von an der äußeren Stirnseite der Erregerspule anliegenden Haltebrücken aufzunehmen, die ihrerseits durch am Laufkörper der Maschine befestigte, auf Zug beanspruchte Bolzen gehalten werden. (DE-PS 9 50 659).

Die Aufgabe der Fixierung von Wickelköpfen eines Rotors stellt sich in besonderer Weise bei läufergespeisten Schleifringläufermaschinen, wie sie für drehzahlregelbare Wasserkraft-Motor-Generatoren für Pumpspeicherbetrieb zum Einsatz kommen. Für derartige Generator-Motoren ist u.a. charakteristisch, dass der Rotor einen Durchmesser von 3 bis 8 m aufweisen kann. Zur Fixierung der Wickelköpfe eines solchen Rotors ist es bekannt, am Rotorkörper über Stützböcke Halteringe anzuordnen, in denen die Enden von U-förmigen Zugbolzen fixiert sind. Je ein Zugbolzen übergreift dabei mit seinem U-förmigen Bereich einen Wicklungskopf (Bericht 11 - 104 "Development and achieved commercial operation ... for a pumped storage power plant", der CIGRE-Tagung 1992, 30. August bis 5. September, JP 08-0908444 A). Eine derartige Wickelkopfbefestigung ist konstruktiv und montagetechnisch sehr aufwändig.

DE 195 19 127 C1 beschreibt eine dynamoelektrische Maschine der genannten Bauart. Dabei umfasst die Sicherungseinrichtung gegen Fliehkräfte Zugstäbe, die mit ihren radial inneren Enden am Tragring, und mit ihren radial äußeren Enden an Lagerkörpern angreifen, die radial außen an den Wickelköpfen anliegen.

Die Wickelköpfe sind stromdurchflossen. Sie werden daher auf höhere Temperaturen erwärmt und dehnen sich aus. Der Tragring hingegen ist nicht stromdurchflossen und bleibt daher kalt. Um hieraus resultierende mechanische Spannungen zu vermeiden, wird dem Luftspalt zwischen dem Tragring und den Wickelköpfen Kühlluft zugeführt, meist von der Stirnseite der Maschine her. Die Kühlluft tritt im Radialspalt zwischen den Wickelköpfen ein, durchströmt diese in radialer Richtung und tritt außerhalb der Wickelköpfe wieder aus. Die Praxis zeigt, dass diese Art von Kühlung nicht ausreicht, wenn wie in der genannten deutschen Schrift die Lagerkörper vergleichsweise groß sind und die Umfangsfläche des Wickelkopfes weitgehend abdecken.

Aus der DE 195 13 457 A1 beziehungsweise der parallelen EP 0736 953 A2 ist daher ein Aufbau bekannt, welcher im Bereich des Wickelkopfträgers, welcher sich an den Rotorkörper anschließt, radial verlaufende Öffnungen aufweist, um Kühlluft in den Bereich des Wickelkopfs strömen zu lassen. Um für eine ausreichende Durchströmung zu sorgen, werden zur Abstützung des Wickelkopfs gegen Fliehkräfte Stützkörper über Zuganker mit einem Tragring im Bereich des Wickelkopfträgers verbunden. Diese Stützkörper sind dabei vergleichsweise klein ausgeführt und über die im Bereich des Wickelkopfes größtenteils in einem Winkel zur axialen Richtung verlaufenden Wicklungselemente verteilt angeordnet.

Der beschriebene Aufbau ermöglicht so zwar eine bessere Kühlung der Wicklungselemente im Bereich des Wickelkopfes, er baut jedoch außerordentlich groß, da zwischen den einzelnen Wicklungselementen ausreichender Raum zur radialen Durchführung der Zugbolzen gegeben sein muss, und weist außerdem entscheidende Nachteile beim Luftwiderstand auf. Die sehr zahlreich und mit großem Abstand zueinander über den Wickelkopf verteilten Stützkörper erzeugen, insbesondere bei schnell laufenden Maschinen, eine sehr starke Verwirbelung der Luft mit einem daraus resultierenden hohen Luftwiderstand.

Zum zweiten Stand der Technik wird auf die DE 195 35 700 A1, die DE 196 35 295 A1 sowie die CH 592 380 A5 verwiesen.

Der Erfindung liegt die Aufgabe zugrunde, einen Rotor für eine dynamoelektrische Maschine gemäß dem Oberbegriff von Anspruch 1 derart zu gestalten, dass einerseits eine zuverlässige Sicherung der Wickelköpfe gegen radiales Aufweiten infolge der Fliehkräfte gewährleistet ist, und andererseits bei ausreichender Kühlung, ein kompakter und kostengünstiger Aufbau realisiert werden kann.

Diese Aufgabe wird durch die Merkmale im kennzeichnenden Teil des Anspruchs 1 gelöst. Weitere vorteilhafte Ausgestaltungen ergeben sich aus den hiervon abhängigen Unteransprüchen.

Die erfindungsgemäße Lösung sieht vor, dass Stützkörper mit Zugbolzen so um den Wickelkopf angeordnet sind, dass die Zuganker durch ohnehin vorhandene Hohlräume zwischen den einzelnen Wicklungselementen verlaufen können. Die Zugbolzen sind dazu so angeordnet, dass diese zwischen den Wicklungselementen hindurch verlaufen, und zwar in Bereichen der Wicklung, in denen diese axial verlaufen oder in den Bereichen der Biegung der Wicklungselemente aus der axialen Richtung in die in einem Winkel zur axialen Richtung verlaufende Richtung. Dadurch lässt sich ein in axialer Richtung sehr kompakter Wickelkopf realisieren, da die Wicklungselemente in dem Bereich, in dem sie dann in einem Winkel zur axialen Richtung verlaufen, sehr dicht beieinander verlaufen können. Somit entsteht ein in axialer Richtung sehr kurzer Wickelkopf, welcher lediglich vergleichsweise kurze freie Wege der Wicklungselemente in ihren schräg verlaufenden Teilen aufweist. Die Wicklungselemente verlaufen dann im Bereich ihrer axialen Enden wiederum in axialer Richtung, wodurch sich wieder der Abstand zwischen den einzelnen Wicklungselementen einstellt, wie er beim Austritt aus dem Rotorkörper beziehungsweise den Nuten, in welchen die Wicklungselemente dort verlaufen, ist. Somit entsteht auch hier genügend Raum für weitere Zugbolzen und zugeordnete Stützkörper in den axial verlaufenden Bereichen oder den Bereichen der Biegung. Der Aufbau realisiert sich dann so, dass die Stützkörper wenigstens zwei in axialer Richtung voneinander beabstandete umlaufende segmentierte ringartige Anordnungen ausbilden, nämlich insbesondere in den Bereichen, in denen sie durch die Zuganker mit dem Wickelkopfträger ohne zusätzlichen Platzaufwand verbindbar sind.

Der erfindungsgemäß aufgebaute Rotor hat also neben einem in axialer Richtung sehr kurzen Wickelkopf zwei in axialer Richtung beabstandete segmentierte ringartige Anordnungen der Stützkörper, zwischen welchen ein freier Bereich verbleibt, sodass Kühlluft sehr gut zwischen diesen beiden ringartigen Anordnungen hindurchströmen und die Wicklungselemente kühlen kann. Durch die ringartigen Anordnungen, welche aus den einzelnen Stützkörpern gebildet werden, entsteht außerdem ein Aufbau, welcher einen vergleichsweise günstigen Widerstandsbeiwert aufweist und so auch bei einem schnell laufenden Rotor deutlich weniger Luftwiderstand verursacht, als der im eingangs genannten Stand der Technik beschriebene Aufbau mit zahlreichen beabstandet voneinander angeordneten Stützkörpern.

Der erfindungsgemäße Rotor erlaubt einen einfachen und kompakten Aufbau, welcher im Bereich des Wickelkopfs neben dem Bauraum und damit dem Material des Wickelkopfträgers insbesondere auch Material bei den Wicklungselementen einspart. Da dieses Material typischerweise ein sehr gut elektrisch leitendes Material, wie beispielsweise Kupfer, ist, kann dadurch ein deutlicher Kostenvorteil erreicht werden. Der kürzere und kleinere Aufbau des Wickelkopfs sowie des den Wickelkopf stützenden Wickelkopfträgers erlaubt außerdem eine Einsparung an Gewicht in einem radial vergleichsweise weit außen liegenden Bereich des Rotors.

Es ist dabei vorgesehen, dass die Zugbolzen im Bereich des Wickelkopfträgers so befestigt sind, dass diese eine Beweglichkeit der Stützkörper in axialer Richtung gewährleisten. Dazu ist das Anzugsdrehmoment der Zugbolzen so gewählt, dass eine geringfügige Bewegung der Profilkörper in den Profilnuten oder Profilnutenabschnitten in axialer Richtung möglich ist. Dies erlaubt letztlich auch eine geringfügige Bewegung in axialer Richtung der die Wicklungselemente stützenden Stützkörper gegenüber dem Wickelkopfträger. Diese Beweglichkeit der Stützkörper in axialer Richtung ist sinnvoll, da die Wicklungselemente stromdurchflossen sind und sich damit entsprechend erwärmen. Der Wickelkopfträger selbst wird sich nicht oder zumindest nicht so stark erwärmen. Aufgrund dieser unterschiedlich starken Erwärmung und der unterschiedlichen Materialien kann es zu einer Relativbewegung der Bauteile zueinander kommen, insbesondere in Richtung der längsten Ausdehnung der Wicklungselemente, also im Wesentlichen in axialer Richtung des Rotors. Um eine solche Längenausdehnung, welche auch bei guter Kühlung oft nicht ganz zu vermeiden ist, entsprechend ausgleichen zu können, können die Zugbolzen im Bereich des Wickelkopfträgers so befestigt sein, dass eine axiale Beweglichkeit der Stützkörper möglich ist. Dadurch können unnötige Spannungen und hohe mechanische Belastungen der Stützkörper und der Zugbolzen vermieden werden.

Dabei ist es vorgesehen, dass zum Sicherstellen der Beweglichkeit der Stützkörper in axialer Richtung die Zugbolzen in Profilkörper eingeschraubt sind, welche im Bereich des Wickelkopfträgers in korrespondierenden axial verlaufenden Profilnuten oder Profilnutenabschnitten angeordnet sind. Solche Profilkörper können beispielsweise in schwalbenschwanzförmigen Profilnuten angeordnet sein, wobei die Stützkörper mit dem Wickelkopfträger nur so weit verspannt werden, dass eine axiale Beweglichkeit noch gewährleistet ist. Die Profilkörper können dann in den Profilnuten gleiten. Dabei ist es denkbar, für jeweils zwei in axialer Richtung fluchtend angeordneten Zugbolzen einen einzigen Profilkörper zu verwenden, welcher in einer Profilnut oder in mehreren axial fluchtenden Profilnutenabschnitten angeordnet ist. Es ist ebenso denkbar, für jeden der Zugbolzen einen eigenen Profilkörper in einer eigenen Profilnut vorzusehen. Ebenso sind Profilnuten denkbar, welche sich in Umfangsrichtung soweit erstrecken, dass sie in Umfangsrichtung mehrere nebeneinander liegende Zugbolzen aufnehmen können.

Der sehr kompakte Wickelkopf hat außerdem den Vorteil, dass der Lagerabstand zur Lagerung des Rotors verkleinert werden kann. Ein solcher kleinerer Lagerabstand zur Lagerung des Rotors erlaubt höhere biegekritische Drehzahlen und stellt einen deutlichen konstruktiven Vorteil dar.

In einer vorteilhaften Weiterbildung des erfindungsgemäßen Rotors ist es ferner vorgesehen, dass jeweils zwei Wicklungselemente in axialer Richtung aus jeder der Nuten austreten, wobei nach einem Wegstück in axialer Richtung das eine der Wicklungselemente in einem Winkel nach rechts zur axialen Richtung verläuft und das andere der Wicklungselemente in einem Winkel nach links zur axialen Richtung verläuft. Am anderen Ende des Wickelkopfs in axialer Richtung gesehen verlaufen die Wicklungselemente dann wieder ein kurzes Stück in axialer Richtung, bevor sie miteinander verbunden werden. Die Zugbolzen sind nun so zwischen dem Rotorkörper und der ersten Kreuzung von Wicklungselementen auf der einen Seite und zwischen der letzten Kreuzung von Wicklungselementen und der Verbindung der Wicklungselemente auf der anderen Seite jeweils aus Richtung des Rotorkörpers her gesehen angeordnet. Dieser Aufbau ordnet die Zugbolzen also ebenfalls in den freien Bereichen, und zwar insbesondere im Bereich der Biegung der einzelnen Wicklungselemente an. Die Zugbolzen können dabei so weit in Richtung der Kreuzungspunkte der sich überkreuzenden Wicklungselemente geschoben werden, dass diese praktisch von den beiden sich kreuzenden Wicklungselementen und dem zwischen den Nuten verlaufenden Material des Rotorkörpers zwischen einer Art Dreieck eingeschlossen sind und so besonders platzsparend angeordnet werden können. Der Aufbau des Rotors lässt sich durch diese besonders platzsparende Anordnung noch weiter verkleinern. Die Stützkörper können dabei von unterschiedlicher Größe ausgebildet werden, sodass sie typischerweise an zwei oder mehr Wicklungselementen anliegen und diese in radialer Richtung gegen Fliehkräfte stützen. In einer besonders günstigen und bevorzugten Ausführungsform ist es dabei vorgesehen, dass jeweils einer der Stützkörper jeweils einem Zugbolzen zugeordnet ist. Dies ist besonders günstig und einfach, um beispielsweise defekte Stützkörper und/oder Zugbolzen einfach und effizient austauschen zu können. Die Aufteilung auf eine größere Zahl von Stützkörper, welche jeweils mit einem Zugbolzen befestigt sind, erlaubt es außerdem bei einem gegebenenfalls notwendigen Austausch eines Wicklungselements gezielt lediglich sehr wenige Stützkörper und Zugbolzen zu entfernen, um so die betroffene Wicklung austauschen zu können.

In einer weiteren sehr vorteilhaften Ausgestaltung des erfindungsgemäßen Rotors ist es dabei vorgesehen, dass die Stützkörper aus einem faserverstärkten Material ausgebildet sind. Derartige faserverstärkte Materialien, welche beispielsweise geordnete oder ungeordnete Fasern in einem Matrixmaterial aus Kunststoff aufweisen können, erlauben bei sehr kostengünstigem Aufbau und bei vergleichsweise leichtem Gewicht eine entsprechend hohe Festigkeit, sodass unter Einsparung von Kosten und Gewicht die benötigte Abstützung der Wicklungselemente im Bereich des Wickelkopfs gegen Fliehkräfte realisiert werden kann. Bei den meisten Maschinen wird dabei ein Aufbau in Form eines glasfaserverstärkten Kunststoffs ausreichen, um die auftretenden Fliehkräfte aufzunehmen. Bei sehr schnell laufenden Maschinen können die Stützkörper auch aus kohlefaserverstärktem Kunststoff hergestellt werden. Dadurch wird das Gewicht bei höherer Festigkeit weiter reduziert, allerdings mit etwas höheren Kosten.

Der Aufbau der Stützkörper aus faserverstärktem Material hat darüber hinaus den Vorteil, dass diese mit einer vergleichsweise frei wählbaren Formgebung einfach und effizient hergestellt werden können. So können die Stützkörper so ausgebildet werden, dass diese nicht als quaderförmige Platten ausgebildet sind, sondern eine gewisse Rundung aufweisen und so nach der Montage einen zwar segmentierten, aber sehr homogenen Ring ausbilden, welcher beispielsweise durch in axialer Richtung gerundete Kanten hinsichtlich des Luftwiderstands optimiert werden kann.

Die Zugbolzen können dabei annähernd beliebig ausgestaltet werden. Insbesondere sind Zugbolzen denkbar, welche auf beiden Seiten über Gewinde verfügen und typischerweise über Unterlegscheiben und Muttern im Bereich der Stützkörper und mit einem Gewinde beispielsweise im Bereich eines Profilelementes in der Profilnut befestigt werden. Dieser Aufbau oder auch alle anderen an sich bekannte Aufbauten von Zugbolzen weisen dabei vergleichsweise viele Bauteile auf und können eventuell negative Auswirkungen auf den vom Rotor verursachten Luftwiderstand haben. Daher ist es in einer sehr günstigen Weiterbildung der Erfindung vorgesehen, dass die Zugbolzen einstückig mit Schraubenköpfen mit einem Innenprofil ausgebildet sind, wobei die Schraubenköpfe im montierten Zustand in Vertiefungen der Stützkörper liegen. Ein solcher Aufbau mit Schraubenköpfen mit einem Innenprofil (Innenantrieb), beispielsweise einem Innensechskant, einem Torx oder Ähnlichem, sind dabei hinsichtlich der Montage einfach und effizient. Die Schraubenköpfe können zum Beispiel angefast ausgebildet sein und ihrerseits in um die Löcher für die Zugbolzen herum ausgebildeten Fasen im Bereich der Stützkörper anliegen. Die Schraubenköpfe verschwinden bei der Montage so in dem Stützkörper, dass eine vergleichsweise ebene Oberfläche des Stützkörpers nach außen entsteht, welche einen vergleichsweise geringen Luftwiderstand hat. Anders als bei Zugbolzen, welche mit Unterlegscheiben und Muttern befestigt werden müssen, entsteht außerdem ein Aufbau, welcher mit einer reduzierten Anzahl an Teilen auskommt und deshalb in der Montage einfacher zu handhaben ist. Auch dadurch entsteht ein Vorteil sowohl beim Gewicht als auch bei den Kosten des Materials und der Montage.

In einer weiteren Ausgestaltung des erfindungsgemäßen Rotors kann es zusätzlich vorgesehen sein, dass im Bereich es Wickelkopfträgers radial verlaufende Öffnungen zur Durchströmung mit Kühlluft vorgesehen sind. Derartige Öffnungen, welche im Bereich des Wickelkopfträgers beispielsweise in Form von ringförmigen Unterbrechungen des Wickelkopfträgers oder radial verlaufenden Kanälen ausgebildet sein können, verbessern ebenfalls die Durchlüftung des Wickelkopfs. Zusammen mit dem Bereich, welcher zwischen den segmentierten ringartigen Anordnungen der Stützkörper frei bleibt, ist so eine sehr gute Durchströmung der Wicklungselemente im Bereich des Wickelkopfs mit Kühlluft möglich, sodass diese sehr gut gekühlt werden können. Durch eine gute Kühlung lässt sich außerdem die axiale Relativbewegung der Wicklungselemente gegenüber dem Wickelkopfträger reduzieren, sodass bei den oben beschriebenen Maßnahmen lediglich dafür gesorgt werden sollte, dass bei Bedarf vergleichsweise geringe Wegstrecken an axialen Relativbewegungen an Bauteilen zueinander ermöglicht werden.

Weitere vorteilhafte Ausgestaltungen des erfindungsgemäßen Rotors ergeben sich aus den restlichen abhängigen Unteransprüchen und ferner aus dem Ausführungsbeispiel, welches nachfolgend unter Bezugnahme auf die Figuren näher erläutert wird.

Dabei zeigen:
- Figur 1: eine prinzipmäßige Schnittdarstellung durch einen Teilabschnitt des erfindungsgemäßen Rotors;
- Figur 2: eine dreidimensionale Ansicht eines Ausschnitts eines Wickelkopfs des erfindungsgemäßen Rotors; und
- Figur 3: eine prinzipmäßige Schnittdarstellung gemäß der Linie III - III in Fig. 2.

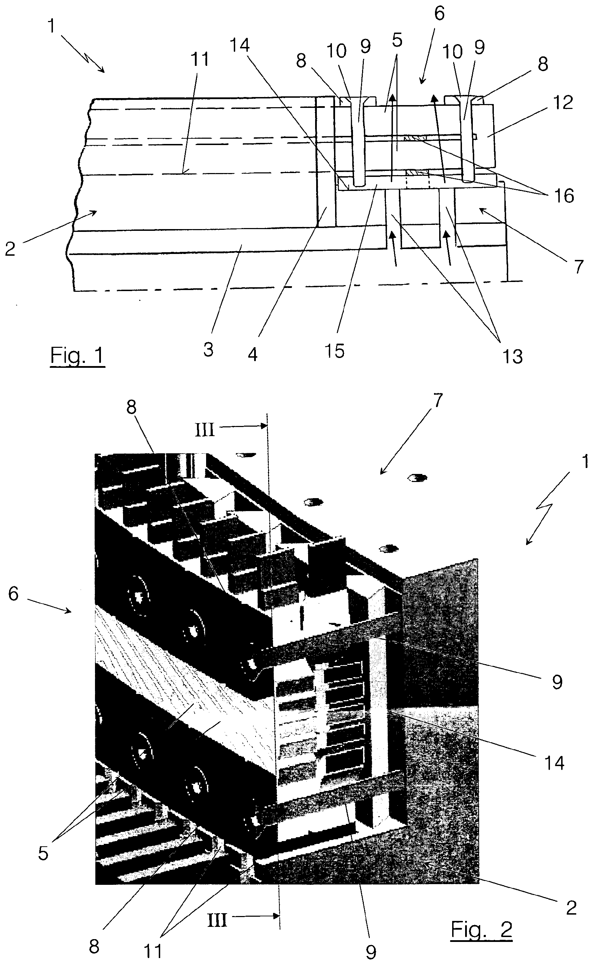

In der Darstellung der Figur 1 ist in einer Prinzipskizze ein Ausschnitt eines Rotors 1 einer dynamoelektrischen Maschine zu erkennen. Ein solcher Rotor 1 kann einen Außendurchmesser aufweisen, welcher beispielsweise eine Größenordnung von drei bis acht Metern hat. Der Rotor 1 besteht dabei typischerweise aus einem Rotorkörper 2, welcher im Allgemeinen geblecht aufgebaut ist, also aus einer Vielzahl von in axialer Richtung aufeinander gestapelten Blechen besteht. Der Rotorkörper 2 kann beispielsweise von einer hier beispielhaft angedeuteten Nabe 3 getragen werden. Bei dem typischen, geblechten Aufbau des Rotorkörpers 2 ist dieser mittels einer Druckplatte 4 axial verspannt. In dem Rotorkörper 2 sind zahlreiche über den Umfang verteilte Nuten 11 vorgesehen, in welchen in an sich bekannter Art und Weise Wicklungselemente 5 angeordnet sind. In der Darstellung der Figur 1 ist dabei auf die geblechte Ausführung bei der Darstellung des Rotorkörpers 2 verzichtet worden. Ebenso sind die Nuten 11 nicht erkennbar, lediglich die in diesen verlaufenden Wicklungselemente 5 sind durch verdeckte Linien angedeutet. Die Wicklungselemente 5, welche typischerweise in Form von Stäben 5, einem sogenannten Oberstab und einem sogenannten Unterstab, zwischen welchen sich eine isolierende Schicht befindet ausgebildet sind, ragen am axialen Ende des Rotorkörpers 2 über diesen hinaus und bilden in diesem Bereich den sogenannten Wickelkopf 6.

Im Bereich dieses Wickelkopfs 6 sind die Enden der Wicklungselemente 5 in einer vorgegebenen Art und Weise miteinander verbunden, wobei jeweils die Enden der Wicklungselemente 5 aus der einen ersten Nut mit den Enden von Wicklungselementen 5 aus einer Nut verbunden sind, welche um eine Anzahl von n-Nuten benachbart zu der besagten ersten Nut angeordnet ist. Im Allgemeinen ist es dabei so, dass der Oberstab mit einer rechts mit dem Abstand von n-Nuten benachbarten Nut beziehungsweise dem darin befindlichen Unterstab verbunden ist, während der Unterstab mit einer nach links um den Abstand von n-Nuten benachbarten Nut beziehungsweise dem darin befindlichen Oberstab verbunden ist, oder anders herum. In der Darstellung der Figur 1 ist eine solche Verbindung 12 nur prinzipiell angedeutet. Sie kann durch geeignete Verbindungselemente oder durch einstückig miteinander verbundene Wicklungselemente 5 gebildet sein. Um dies zu realisieren ist es dabei notwendig und üblich, dass die einzelnen Wicklungselemente 5, nachdem sie den Rotorkörper 2 beziehungsweise die Nut 11 verlassen haben, noch eine geringe Wegstrecke axial weiterlaufen und dann in einem Winkel zur Achse abgeknickt sind, um in den Bereich der Wicklungselemente 5 zu gelangen mit der sie an ihrem Ende verbunden wird.

Die Wicklungselemente 5 sind dabei typischerweise aus einem elektrisch sehr gut leitenden Material, beispielsweise aus Kupfer aufgebaut. Da dieses Material vergleichsweise weich ist, erfahren die Wicklungselemente 5 durch die beim Umlaufen des Rotors 1 auftretenden Fliehkräfte im Bereich des Wickelkopfs 6 sehr leicht eine Verformung und werden nach außen gebogen, sofern diese nicht abgestützt werden. Bei dem hier dargestellten Rotor 1 ist die Abstützung der Wicklungselemente 5 im Bereich des Wickelkopfs 6 nun so ausgeführt, dass radial innerhalb des Wickelkopfs 6 und koaxial zu diesen ein Wickelkopfträger 7 angeordnet ist, welcher sich ebenfalls auf der Nabe 3 beziehungsweise einem Fortsatz der Nabe 3 abstützt und dementsprechend mit der Nabe 3 und dem Rotorkörper 2 umläuft. Dieser Wickelkopfträger 7 kann dabei ebenfalls geblecht ausgeführt sein, oder alternativ dazu beispielsweise aus einem massiven Material oder als Hohlkörper, zum Beispiel in Form einer aus Einzelelementen geschweißten Konstruktion.

Die Wicklungselemente 5 sind im Bereich des Wickelkopfs 6 mit außen an den Wicklungselementen 5 anliegenden Stützkörpern 8 versehen, welche ihrerseits über Zugbolzen 9 mit dem Bereich des Wickelkopfträgers 7 verbunden sind. Die Stützkörper 8 sind dabei bevorzugt als einzelne Plättchen oder Klötzchen ausgebildet, welche aus einem nicht magnetischen Material bestehen. Insbesondere können die Stützkörper 8 aus einem elektrisch isolierenden Material ausgeführt sein, beispielsweise aus einem glasfaserverstärkten Kunststoff oder bei schneller laufenden Maschinen gegebenenfalls auch aus einem mit Kohlefasern verstärkten Kunststoff. Die Fasern können dabei insbesondere als Kurzfasern ungeordnet im Material des Stützkörpers 8 angeordnet sein, oder, wenn sehr hohe Kräfte aufgenommen werden müssen, auch in Form von abgelegten Fasersträngen, gewebten Fasermatten oder dergleichen in einer geordneten vorzugsweise dem Kraftfluss folgenden Anordnung. Die einzelnen Stützkörper 8 sind nun mit den Zugbolzen 9 mit dem Wickelkopfträger 7 verbunden, sodass sie die Wicklungselemente 5 gegen Fliehkräfte abstützen können. Die Zugbolzen 9 werden dabei, wie durch den Namen bereits angedeutet, auf Zug beansprucht. Zwischen den Wicklungselementen 5 und/oder dem Wickelkopfträger 7 können außerdem optionale Stützelemente 16 vorgesehen sein, welche in der Darstellung der Figur 1 zu erkennen sind.

Der Aufbau der Zugbolzen 9 spielt dabei keine entscheidende Rolle. Es kann jedoch vorgesehen sein, dass die Zugbolzen 9 einstückig mit einem Schraubenkopf 10 ausgebildet sind, welcher mit einem Innenprofil (Innenantrieb) bildet. Dieser Schraubenkopf 10 mit dem Innenprofil hat dabei den Vorteil, dass er sich in einer geeigneten Vertiefung des Stützkörpers 8 annähernd vollständig versenken lässt, sodass der Aufbau aus Zugbolzen 9 und Stützkörper 8 nach der Montage eine vergleichsweise glatte Oberfläche aufweist und damit einen möglichst geringen Luftwiderstand hat. Alle Alternativen und an sich bekannten Aufbauten von Zugbolzen 9 sind jedoch ebenso denkbar.

In der Darstellung der Figur 2 ist dieser Aufbau ein einer dreidimensionalen Ansicht nochmals zu erkennen. Auch hier ist der Rotorkörper 2 und der Wickelkopfträger 7 in der vereinfachten Darstellung als einziges einstückiges Bauteil zu erkennen. Dieses wird jedoch insbesondere im Bereich des Rotorkörpers 2 typischerweise geblecht aufgebaut sein. In dem Teilschnitt der dreidimensionalen Darstellung sind mehrere Wicklungselemente 5 in Form der Oberstäbe und der Unterstäbe zu erkennen, welche aus den Nuten 11 des Rotorkörpers 2 herausragen und nach einer gewissen Laufstrecke in axialer Richtung in einem Winkel zur Achse abgeschrägt sind, um dann mit Wicklungselementen 5, welche durch andere Nuten verlaufen, an ihren Enden verbunden zu werden. Dabei knickt beispielsweise der Oberstab nach dem Verlassen der Nut und nach einer gewissen Lauflänge in axialer Richtung nach rechts und der in der jeweiligen Nut 11 angeordnete Unterstab entsprechend nach links ab.

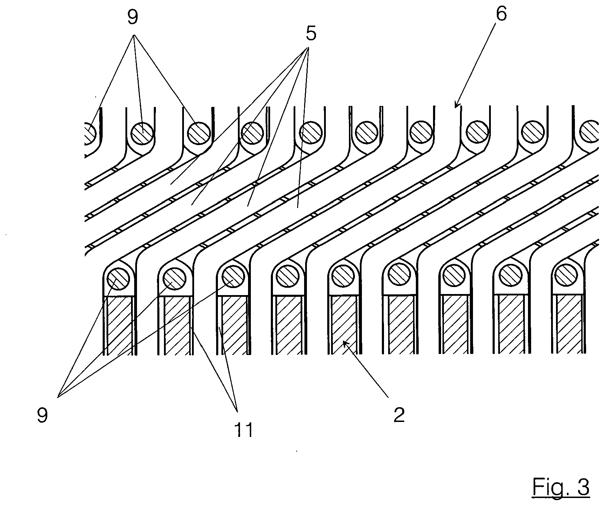

Außerdem ist in der Darstellung der Figur 2 zu erkennen, dass jedem der Stützkörper 8 ein Zugbolzen 9 zugeordnet ist, und dass die Zugbolzen 9 in einer im Rahmen der Figur 3 noch besser zu erkennenden Art und Weise so angeordnet sind, dass diese die Wicklungselemente 5 in den axial verlaufenden Bereichen oder den Bereichen der Biegung radial durchdringen. Da die Nuten 11 in dem Rotorkörper 2 beabstandet voneinander angeordnet sein müssen, ergibt sich so in dem Bereich, in dem die Wicklungselemente 5 noch in axialer Richtung verlaufen, und dann gebogen sind, ein Freiraum zwischen den einzelnen Wicklungselementen 5. Der Freiraum liegt dabei insbesondere zwischen dem Rotorkörper 2 und der ersten Kreuzung von Wicklungselementen 5 des Oberstabs und des Unterstabs der benachbarten Nut 11 auf der dem Rotorkörper 2 zugewandten Seite. Auf der den Verbindungen 12 zugewandten Seite liegt der Freiraum insbesondere in dem Bereich zwischen der letzten Kreuzung von Wicklungselementen 5 des Oberstabs und des Unterstabs und der Verbindung 12, wie sie in Figur 1 dargestellt ist. Durch den Freiraum können in dem hier dargestellten Aufbau des Rotors 1 die Zugbolzen 9 hindurchgeschoben werden. Die Zugbolzen 9 sind damit in Bereichen angeordnet, in denen Bauraum für sie vorhanden ist, ohne dass hierfür eine konstruktive Anpassung des Wickelkopfs 6 notwendig wäre. Dies ermöglicht es, den Wickelkopf 6 in dem Bereich, in dem die Wicklungselemente 5 schräg zur Achse verlaufen, sehr kompakt zu gestalten, da die Wicklungselemente 5 hier sehr dicht beieinander geführt werden können. Der Wickelkopf 6 lässt sich so in axialer Richtung außerordentlich kompakt aufbauen. Es wird Bauraum und Gewicht eingespart und insbesondere wird weniger des vergleichsweise teuren elektrisch sehr gut leitenden Materials der Wicklungselemente 5, typischerweise Kupfer benötigt. Der Aufbau ist also außerordentlich kompakt, leicht und lässt sich entsprechend kostengünstig realisieren.

Da die Bereiche, in denen die Freiräume zwischen den Wicklungselementen 5 liegen, typischerweise in dem Bereich sind, in dem die Wicklungselemente 5 aus den Nuten 11 austreten und in den Bereich in dem die Wicklungselemente 5 an ihren Enden verbunden sind, ergibt sich durch die Anordnung der Zugbolzen 9 und der Stützkörper 8, wobei jeweils einer der Stützkörper 8 einem der Zugbolzen 9 zugeordnet sein kann, ein Aufbau, bei dem die Stützkörper 8 zwei axial voneinander beabstandete segmentierte ringartige Anordnungen um den Umfang des Wickelkopfs 6 herum ausbilden. Durch die axiale Beabstandung der Stützkörper 8 müssen die Wicklungselemente 5 aufgrund ihrer Materialeigenschaften zwar in der Lage sein, in diesem Abschnitt die Fliehkräfte selbst zu tragen, dies ist bei der typischerweise vorliegenden Dimensionierung der Ober- und Unterstäbe 5 jedoch unkritisch, da insbesondere der erfindungsgemäße Aufbau einen in axialer Richtung sehr kompakten Wickelkopf 6 erlaubt und so dieser Abstand entsprechend klein ausfällt.

Der Abstand zwischen den axial voneinander beabstandeten ringartigen Anordnungen der Stützkörper 8 reicht aber dennoch aus, um Kühlluft durch den Bereich des Wickelkopfs 6 strömen zu lassen, um so die Wicklungselemente 5 im Bereich des Wickelkopfs 6 sehr gut kühlen zu können. Dafür sind in der Darstellung der Figur 1 zusätzlich radial verlaufende Öffnungen 13 zu erkennen, welche hier die Nabe 3 beziehungsweise den Fortsatz der Nabe 3 und den Wickelkopfträger 7 durchdringen und so eine Kühlluftströmung gemäß den eingezeichneten Pfeilen typischerweise von innen nach außen durch den Wickelkopf 6 ermöglichen. Der Aufbau kann also außerordentlich kompakt und kostengünstig realisiert werden und erlaubt darüber hinaus eine sehr gute Kühlung der Wicklungselemente 5 im Bereich des Wickelkopfs 6.

Trotz der vergleichsweise guten Kühlung des Wickelkopfs 6 in dem hier dargestellten Aufbau kommt es aufgrund der unterschiedlichen Materialien des Wickelkopfträgers 7 und der Wicklungselemente 5 und aufgrund der Tatsache, dass die Wicklungselemente 5 von elektrischem Strom durchströmt werden, zu unterschiedlichen Temperaturen in den Wicklungselementen 5 einerseits und in dem Wickelkopfträger 7 andererseits. Dadurch können sich im Betrieb thermisch bedingte Relativbewegungen zwischen den Wicklungselementen 5 und dem Wickelkopfträger 7 ergeben, welche zu starken mechanischen Spannungen führen könnten, welche nach Möglichkeit zu vermeiden sind. Die Anbindung der Stützkörper 8 beziehungsweise der Zugbolzen 9 im Bereich des Wickelkopfträgers 7 sollte daher so ausgebildet sein, dass diese eine zumindest geringfügige Bewegung in axialer Richtung zulässt. In der hier dargestellten bevorzugten Ausführungsform des Rotors 1 ist dies so realisiert, dass im Bereich des Wickelkopfträgers 7 Nuten 14 angeordnet sind, welche in axialer Richtung verlaufen. Diese Nuten 14 sind insbesondere in der Darstellung der Figur 2 zu erkennen. Neben durchlaufenden Nuten 14, welche sich über die gesamte axiale Länge des Wickelkopfträgers 7 erstrecken, wäre es ebenso denkbar, axial fluchtende Nutenabschnitte beispielsweise im axial dem Rotorkörper 2 zugewandten Bereich des Wickelkopfträgers 7 und im axial dem Rotorkörper 2 abgewandten Bereich des Wickelkopfträgers 7 anzuordnen. Ein solcher Aufbau könnte die Zirkulation von Kühlluft weiter begünstigen, ist jedoch in der Herstellung etwas aufwändiger.

In den Nuten 14 sind dann geeignete Profilkörper 15 angeordnet, welche in der dreidimensionalen Darstellung der Figur 2 nicht zu erkennen sind. In der Darstellung der Figur 1 ist ein solcher Profilkörper 15 als durchlaufender Profilkörper 15 dargestellt. Dieser kann beispielsweise in einer in axialer Richtung durchlaufenden Nut 14 angeordnet sein, welche insbesondere das in Figur 2 erkennbare Schwalbenschwanzprofil aufweist. Der Profilkörper 15, wie er in Figur 1 dargestellt ist, muss dementsprechend dasselbe Profil aufweisen. Anstelle der durchlaufenden Nut 14 in axialer Richtung sind ebenso zwei oder mehr in axialer Richtung fluchtende Nutenabschnitte denkbar, wie bereits oben erläutert wurde. Dementsprechend kann auch der Profilkörper 15 bei Bedarf entsprechend unterteilt sein, sodass lediglich im Bereich der Zugbolzen 9 ein Profilkörper 15 als Gegenstück vorliegt, in welchem der Zugbolzen 9 insbesondere über ein Gewinde aufgenommen ist. Ein solcher Aufbau erlaubt dann bei geeignet gewähltem Anzugsdrehmoment der Zugbolzen 9 bei Bedarf eine geringfügige Bewegung in axialer Richtung des Profilkörpers 15 gegenüber der Nut 14 und damit letztlich der die Wicklungselemente 5 stützenden Stützkörper 8 gegenüber dem Wickelkopfträger 7.

## Patentansprüche

1. Rotor (1) für eine dynamoelektrische Maschine, mit
1.1 Wicklungselementen (5), welche in axial verlaufenden Nuten (11) eines Rotorkörpers (2) angeordnet sind,
1.2 einem Wickelkopf (6), welcher axial neben dem Rotorkörper (2) angeordnet ist, wobei in dem Bereich des Wickelkopfes (6) die Wicklungselemente (5) in axialer Richtung aus den Nuten (11) austreten, dann in einem Winkel zur axialen Richtung verlaufen und dann im Bereich ihrer axialen Enden wieder in axialer Richtung verlaufen und mit weiteren Wicklungselementen (5) verbunden sind,
1.3 einem Wickelkopfträger (7), welcher radial innerhalb des Wickelkopfs (6) angeordnet ist,
1.4 der Wickelkopf (6) über Zugbolzen (9), welche an ihren radial äußeren Enden an Stützkörpern (8) angreifen, welche ihrerseits auf den Wicklungselementen (5) im Bereich des Wickelkopfs (6) aufliegen, mit dem Wickelkopfträger (7) verbunden ist,
1.5 die Zugbolzen (9) den Wickelkopf (6) in radialer Richtung in den axial verlaufenden Bereichen oder den Bereichen der Biegung aus der axialen Richtung in die in einem Winkel zur axialen Richtung verlaufende Richtung der Wicklungselemente (5) durchdringen,
1.6 die Stützkörper (8) wenigstens zwei in axialer Richtung beabstandete umlaufende segmentierte ringartige Anordnungen ausbilden,
1.7 die Zugbolzen (9) in Profilkörpern (15) eingeschraubt sind, welche im Bereich des Wickelkopfträgers (7) in korrespondierenden axial verlaufenden Profilnuten (14) oder Profilnutenabschnitten angeordnet sind,
**dadurch gekennzeichnet, dass**
1.8 die Zugbolzen (9) im Bereich des Wickelkopfträgers (7) so befestigt sind, dass eine Beweglichkeit der Stützkörper (8) in axialer Richtung gegeben ist, indem
1.9 das Anzugsdrehmoment der Zugbolzen (9) so gewählt ist, dass eine geringfügige Bewegung der Profilkörper (15) in den Profilnuten (14) oder Profilnutenabschnitten in axialer Richtung möglich ist, um eine Relativbewegung der Stützkörper (8) zum Wickelkopfträger (7) auszugleichen.

2. Rotor nach Anspruch 1, **dadurch gekennzeichnet, dass**
2.1 je zwei Wicklungselemente (5) in axialer Richtung aus jeder der Nuten (11) austreten, wobei nach einem Wegstück in axialer Richtung das eine der Wicklungselemente (5) in einem Winkel nach rechts zur axialen Richtung verläuft und das andere der Wicklungselemente (5) in einem Winkel nach links zur axialen Richtung verläuft und dann die Wicklungselemente (5) im Bereich ihrer axialen Enden wieder in axialer Richtung verlaufen und eine Verbindung (12) mit anderen Wicklungselementen (5) aufweisen,
2.2 die Zugbolzen (9) zwischen dem Rotorkörper (2) und der ersten Kreuzung von Wicklungselementen (5) und zwischen der letzten Kreuzung von Wicklungselementen (5) und der Verbindung (12) aus Richtung des Rotorkörpers (2) gesehen angeordnet sind.

3. Rotor nach Anspruch 1 oder 2, **dadurch gekennzeichnet, dass** jeweils einem der Zugbolzen (9) einer der Stützkörper (8) zugeordnet ist.

4. Rotor nach Anspruch 1, 2 oder 3, **dadurch gekennzeichnet, dass** die Stützkörper (8) aus einem nicht magnetischen, insbesondere einem elektrisch isolierenden Material ausgebildet sind.

5. Rotor nach einem der Ansprüche 1 bis 4, **dadurch gekennzeichnet, dass** die Stützkörper (8) aus einem faserverstärkten Material ausgebildet sind.

6. Rotor nach Anspruch 5, **dadurch gekennzeichnet, dass** das Material der Stützkörper (8) geordnete oder ungeordnete Fasern, insbesondere Glasfasern und/oder Kohlestofffasern, in einer Materialmatrix aus Kunststoff aufweist.

7. Rotor nach einem der Ansprüche 1 bis 6, **dadurch gekennzeichnet, dass** die Zugbolzen (9) einstückig mit Schraubenköpfen (10) mit einem Innenprofil ausgebildet sind, wobei die Schraubenköpfe (10) in montiertem Zustand in Vertiefungen der Stützkörper (8) liegen.

8. Rotor nach einem der Ansprüche 1 bis 7, **dadurch gekennzeichnet, dass** im Bereich des Wickelkopfträgers (7) radial verlaufende Öffnungen (13) zur Durchströmung mit Kühlluft vorgesehen sind.

## Claims

1. Rotor (1) for a dynamoelectric machine, comprising
1.1 winding elements (5) which are arranged in axially extending grooves (11) of a rotor body (2),
1.2 a winding head (6) which is arranged axially adjacent to the rotor body (2), wherein, in the region of the winding head (6), the winding elements (5) emerge from the grooves (11) in the axial direction, then extend at an angle to the axial direction and then, in the region of their axial ends, extend in the axial direction again and are connected to other winding elements (5), 1.3 a winding head carrier (7) which is arranged radially inside of the winding head (6),
1.4 the winding head (6) is connected to the winding head carrier (7) by way of tension bolts (9) which, at their radially outer ends, bear against support bodies (8) which in turn rest on the winding elements (5) in the region of the winding head (6),
1.5 the tension bolts (9) pass through the winding head (6) in the radial direction in the axially extending regions of the winding elements (5) or in the regions in which the latter bend out of the axial direction into the direction extending at an angle to the axial direction,
1.6 the support bodies (8) form at least two circumferential segmented annular assemblies which are spaced apart in the axial direction,
1.7 the tension bolts (9) are screwed into profile bodies (15) which are arranged in the region of the winding head carrier (7) in corresponding, axially extending profile grooves (14) or profile groove sections,
**characterized in that**
1.8 the tension bolts (9) are fastened in the region of the winding head carrier (7) in such a way that a mobility of the support bodies (8) in the axial direction is provided, whereby
1.9 the tightening torque of the tension bolts (9) is selected such that a slight movement of the profile bodies (15) in the profile grooves (14) or profile groove sections in the axial direction is possible in order to compensate a relative movement of the support bodies (8) relative to the winding head carrier (7).

2. Rotor according to claim 1, **characterized in that**
2.1 in each case two winding elements (5) emerge in the axial direction from each of the grooves (11), wherein, after a certain distance in the axial direction, one of the winding elements (5) extends at an angle to the right relative to the axial direction and the other of the winding elements (5) extends at an angle to the left relative to the axial direction, and then, in the region of their axial ends, the winding elements (5) extend in the axial direction again and have a connection (12) to other winding elements (5),
2.2 the tension bolts (9), as seen from the direction of the rotor body (2), are arranged between the rotor body (2) and the first crossing of winding elements (5) and between the last crossing of winding elements (5) and the connection (12).

3. Rotor according to claim 1 or 2, **characterized in that** one of the support bodies (8) is assigned to each tension bolt (9).

4. Rotor according to claim 1, 2 or 3, **characterized in that** the support bodies (8) are formed from a non-magnetic material, in particular an electrically insulating material.

5. Rotor according to one of claims 1 to 4, **characterized in that** the support bodies (8) are formed from a fibre-reinforced material.

6. Rotor according to claim 5, **characterized in that** the material of the support bodies (8) comprises ordered or unordered fibres, in particular glass fibres and/or carbon fibres, in a material matrix made of plastic.

7. Rotor according to one of claims 1 to 6, **characterized in that** the tension bolts (9) are formed in one piece with screw heads (10) having an internal profile, wherein the screw heads (10), in the assembled state, are situated in depressions of the support bodies (8).

8. Rotor according to one of claims 1 to 7, **characterized in that** radially extending openings (13) for a throughflow of cooling air are provided in the region of the winding head carrier (7).

## Revendications

1. Rotor (1) pour une machine dynamoélectrique, comprenant
1.1 des éléments d'enroulement (5) qui sont disposés dans des rainures s'étendant axialement (11) d'un corps de rotor (2),
1.2 une tête d'enroulement (6) qui est disposée axialement à côté du corps de rotor (2), dans lequel les éléments d'enroulement (5) sortent des rainures (11) dans la direction axiale dans la zone de la tête d'enroulement (6), s'étendent ensuite en angle par rapport à la direction axiale, puis s'étendent à nouveau dans la direction axiale dans la zone de leurs extrémités axiales et sont reliés à d'autres éléments d'enroulement (5),
1.3 un support de tête d'enroulement (7) qui est disposé radialement à l'intérieur de la tête d'enroulement (6),
1.4 la tête d'enroulement (6) est reliée au support de tête d'enroulement (7) par l'intermédiaire de boulons de tension (9) qui agissent à leurs extrémités radialement extérieures sur des corps d'appui (8) qui reposent à leur tour sur les éléments d'enroulement (5) dans la zone de la tête d'enroulement (6),
1.5 les boulons de tension (9) traversent la tête d'enroulement (6) dans la direction radiale dans les zones s'étendant axialement ou dans les zones de la courbure à partir de la direction axiale vers la direction des éléments d'enroulement (5) s'étendant en angle par rapport à la direction axiale, 1.6 les corps d'appui (8) forment au moins deux agencements annulaires segmentés périphériques espacés dans la direction axiale,
1.7 les boulons de tension (9) sont vissés dans des corps profilés (15) qui sont disposés dans la zone du support de tête d'enroulement (7) dans des rainures profilées (14) ou sections de rainures profilées correspondantes s'étendant axialement,
**caractérisé en ce que**
1.8 les boulons de tension (9) sont fixés dans la zone du support de tête d'enroulement (7) de telle sorte que les corps d'appui (8) puissent se déplacer dans la direction axiale,
1.9 le couple de serrage des boulons de tension (9) étant choisi de telle sorte qu'un léger mouvement des corps profilés (15) dans les rainures profilées (14) ou sections de rainures profilées dans la direction axiale soit possible pour compenser un mouvement relatif des corps d'appui (8) par rapport au support de tête d'enroulement (7).

2. Rotor selon la revendication 1, **caractérisé en ce que**
2.1 deux éléments d'enroulement (5) sortent chaque fois dans la direction axiale de chacune des rainures (11), dans lequel, après un bout de chemin dans la direction axiale, l'un des éléments d'enroulement (5) s'étend en angle vers la droite par rapport à la direction axiale et l'autre des éléments d'enroulement (5) s'étend en angle vers la gauche par rapport à la direction axiale, puis les éléments d'enroulement (5) s'étendent à nouveau dans la direction axiale dans la zone de leur extrémité axiale et présentent une liaison (12) avec d'autres éléments d'enroulement (5),
2.2 vu depuis le corps de rotor (2), les boulons de tension (9) sont disposés entre le corps de rotor (2) et le premier croisement d'éléments d'enroulement (5) et entre le dernier croisement d'éléments d'enroulement (5) et la liaison (12).

3. Rotor selon la revendication 1 ou 2, **caractérisé en ce qu'**un des corps d'appui (8) est chaque fois associé à un des boulons de tension (9).

4. Rotor selon la revendication 1, 2 ou 3, **caractérisé en ce que** les corps d'appui (8) sont constitués d'un matériau non magnétique, en particulier d'un matériau électriquement isolant.

5. Rotor selon l'une des revendications 1 à 4, **caractérisé en ce que** les corps d'appui (8) sont formés d'un matériau renforcé par des fibres.

6. Rotor selon la revendication 5, **caractérisé en ce que** le matériau des corps d'appui (8) présente des fibres ordonnées ou désordonnées, en particulier des fibres de verre et/ou des fibres de carbone, dans une matrice en matière plastique.

7. Rotor selon l'une des revendications 1 à 6, **caractérisé en ce que** les boulons de tension (9) sont formés d'une seule pièce avec des têtes de vis (10) dotées d'un profil intérieur, les têtes de vis (10) étant placées à l'état monté dans des renfoncements des corps d'appui (8).

8. Rotor selon l'une des revendications 1 à 7, **caractérisé en ce que** des ouvertures (13) s'étendant radialement sont prévues dans la zone du support de tête d'enroulement (7) pour l'écoulement d'un air de refroidissement.
